(19) Europäisches Patentamt
European Patent Office
Office européen des brevets

(11) EP 4 480 934 A1

(12) # EUROPEAN PATENT APPLICATION

(43) Date of publication:
**25.12.2024 Bulletin 2024/52**

(21) Application number: **24178903.1**

(22) Date of filing: **29.05.2024**

(51) International Patent Classification (IPC):
***C04B 28/04*** *(2006.01)* ***C04B 40/00*** *(2006.01)*
*C04B 103/44 (2006.01)*

(52) Cooperative Patent Classification (CPC):
(C-Sets available)
**C04B 40/0039; C04B 28/04;** C04B 2103/0083;
C04B 2103/44; C04B 2111/29 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.06.2023 JP 2023092810**

(71) Applicant: **SHIN-ETSU CHEMICAL CO., LTD.**
**Tokyo (JP)**

(72) Inventors:
- **SAITO, Hironao**
  **Joetsu-shi (JP)**
- **KONISHI, Hidekazu**
  **Joetsu-shi (JP)**

(74) Representative: **Mewburn Ellis LLP**
**Aurora Building**
**Counterslip**
**Bristol BS1 6BX (GB)**

(54) **HYDRAULIC COMPOSITION, THICKENER AND ADDITIVE THEREFOR**

(57) A thickener comprising (A) a hydroxyalkyl alkyl cellulose and (B) a specific polyethylene glycol derivative is effective for imparting frost damage resistance, good fluidity and a bleeding reducing effect to a hydraulic composition.

EP 4 480 934 A1

(52) Cooperative Patent Classification (CPC): (Cont.)

C-Sets
**C04B 28/04, C04B 24/383, C04B 24/045,
C04B 2103/65, C04B 2103/50, C04B 24/18,
C04B 2103/304, C04B 14/06, C04B 20/0076,
C04B 2103/50;
C04B 28/04, C04B 24/383, C04B 24/32,
C04B 2103/65, C04B 2103/50, C04B 24/2647,
C04B 2103/304, C04B 14/06, C04B 20/0076,
C04B 2103/50;
C04B 40/0039, C04B 24/383, C04B 24/045,
C04B 2103/65, C04B 2103/50, C04B 2103/302;
C04B 40/0039, C04B 24/383, C04B 24/32,
C04B 2103/65, C04B 2103/50, C04B 2103/32**

## Description

### TECHNICAL FIELD

This invention relates to a hydraulic composition, a thickener and an additive therefor.

### BACKGROUND

Water-soluble cellulose ethers as typified by hydroxyalkyl alkyl celluloses are widely used as the thickener for reducing bleeding without loss of fluidity. The water-soluble cellulose ethers, however, have an air entraining ability, with the risk that the air content of a hydraulic composition or concrete is increased beyond the standard (4.5±1.5%) to reduce the compressive strength of concrete. One approach is to add a defoamer to remove air bubbles to reduce the air content. However, this approach leads to the deterioration of frost damage resistance because fine bubbles which are effective for preventing frost damage can be simultaneously removed.

A hydraulic composition using water-soluble cellulose ether and yet having frost damage resistance is known from Patent Document 1 which discloses a concrete composition comprising a concrete blend consisting of a cement binder, an aggregate, water, a water-reducing agent and an air entraining (AE) agent wherein 0.02 to 0.5% by weight (based on the cement binder) of an alkali metal salt of sulfoethyl cellulose and a nonionic water-soluble cellulose ether are added to the concrete blend.

### Citation List

| | |
|---|---|
| Patent Document 1: | JP-A H05-085791 |
| Non-Patent Document 1: | "Approach to emulsion formulation design p.2-9", Nihon Emulsion Co., Ltd., "What is an emulsion formulation design with organic conception diagram?" (as of Jan 10, 2023), internet < https://www.nihon-emulsion.co.jp/en/tech/organic.html > |

### DISCLOSURE OF INVENTION

The sulfoethyl cellulose used in Patent Document 1 has the drawback of aggravated fluidity despite low air entrainment. Additionally, the sulfoethyl cellulose is expensive and thus unfavorable from the aspect of economy. There remains room for improvement.

An object of the invention is to provide a thickener for hydraulic compositions which is effective for formulating a hydraulic composition which has satisfactory frost damage resistance and is improved in fluidity and bleeding reduction; a thickener-containing additive for hydraulic compositions; and a hydraulic composition.

The inventors have found that when a water-soluble cellulose ether and a polyethylene glycol (PEG) derivative of specific chemical structure are used in combination, the outstanding problems of a hydraulic composition including frost damage, fluidity and bleeding can be overcome.

In one aspect, the invention provides a thickener for hydraulic compositions comprising

(A) a hydroxyalkyl alkyl cellulose and
(B) a polyethylene glycol derivative having an IOB value in the organic conception diagram of 0.3 to 1.8 and a weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

In one preferred embodiment, component (B) is at least one of polyethylene glycol derivatives having the general formulae (B 1) and (B2):

$$RCOO\text{-}(C_2H_4O)_n\text{-}H \qquad (B1)$$

$$(RCOO\text{-}(C_2H_4O)_{n1})_tR^1((OC_2H_4)n_2\text{-}OH)_u \qquad (B2)$$

wherein R and n are as defined above, $R^1$ is a residue obtained from a polyhydric alcohol having 2 to 5 hydroxy groups by

eliminating the hydroxy groups, the residue being a di- to penta-valent $C_2$-$C_5$ straight or branched hydrocarbon group, t and u each are an integer of 1 to 4, the sum of t and u is an integer of 2 to 5, n1 and n2 each are an integer of at least 0, and $n1 \times t + n2 \times u$ is an integer of 3 to 30.

Specifically, the hydroxyalkyl alkyl cellulose as component (A) is hydroxypropyl methyl cellulose or hydroxyethyl methyl cellulose.

In one preferred embodiment, the hydroxyalkyl alkyl cellulose as component (A) has a 2 wt% aqueous solution viscosity of 15 to 450,000 mPa·s at 20°C.

The thickener may further comprise a water repellent.

In another aspect, the invention provides a thicker-containing additive for hydraulic compositions, comprising the thickener defined above and (C) water and/or a liquid water-reducing agent.

In a further aspect, the invention provides a hydraulic composition comprising the thicker-containing additive defined above, a hydraulic substance, and water;

a hydraulic composition comprising the thickener defined above, a hydraulic substance, and water and/or a liquid water-reducing agent; or

a hydraulic composition comprising (A) a hydroxyalkyl alkyl cellulose, (B) a polyethylene glycol derivative having an IOB value in the organic conception diagram of 0.3 to 1.8 and a weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group, a hydraulic substance, and water and/or a liquid water-reducing agent.

The hydraulic composition may further comprise a water repellent.

In a preferred embodiment, the hydraulic composition is a concrete composition further comprising a fine aggregate, a coarse aggregate, and a water-reducing agent, the concrete composition having a slump of 8 to 21 cm as measured by the method of JIS A 1101 and a compressive strength of 18 to 45 $N/mm^2$ as measured by the method of JIS A 1108 at an age of 28 days.

## ADVANTAGEOUS EFFECTS

Using the thickener for hydraulic compositions and the thickener-containing additive for hydraulic compositions, the hydraulic composition is improved in frost damage resistance, fluidity and bleeding reduction.

## FURTHER EXPLANATIONS; OPTIONS AND PREFERENCES

As used herein, Mw stands for weight average molecular weight, GPC for gel permeation chromatography, DS for "degree of substitution," and MS for "molar substitution." The notation (Cn-Cm) means a group containing from n to m carbon atoms per group.

<Thickener>

One embodiment of the invention is a thickener for hydraulic compositions. The thickener is defined as comprising (A) a hydroxyalkyl alkyl cellulose and (B) a polyethylene glycol (PEG) derivative. The PEG derivative has an IOB value in the organic conception diagram of 0.3 to 1.8 and a weight average molecular weight Mw of 300 to 2,500 as measured by GPC versus polystyrene standards, and contains at least one $RCOO(C_2H_4O)_n$-wherein R is a $C_{10}$-$C_{24}$ straight or branched monovalent hydrocarbon group and n is an integer of 3 to 40 in the molecule and a polyethylene glycol end OH or -OH group as a functional group.

Another embodiment of the invention is a thickener-containing additive for hydraulic compositions, comprising (C) water and/or a liquid water-reducing agent in addition to the thickener, i.e., components (A) and (B).

Aiming to overcome the three outstanding problems of frost damage, fluidity and bleeding of hydraulic compositions, the inventors focused on the structure of a polyethylene glycol (PEG) derivative.

The inventors made investigations as follows. In a hydraulic composition, the structure of PEG, when functioning as a defoamer, affects the size of air bubbles which are easy to remove and the defoaming ability (as viewed from frost damage resistance). Also, a monovalent hydrocarbon group at the end of the PEG derivative affects the dispersion of cement particles (as viewed from fluidity). Further, the magnitude of Mw of PEG derivative affects the thickness of a cover of water adsorbing to cement particles (as viewed from bleeding reduction). The hydroxyalkyl alkyl cellulose does not prohibit the PEG derivative from exerting its effects and rather helps enhance the effects.

Through the above investigations, the inventors have found that a PEG derivative of specific structure is

advantageous. By using the hydroxyalkyl alkyl cellulose in combination with the PEG derivative as a thickener for hydraulic compositions, significant improvements in frost damage resistance, fluidity and bleeding reduction are achievable.

One embodiment of the invention is a thickener for hydraulic compositions comprising (A) a hydroxyalkyl alkyl cellulose and (B) a PEG derivative, the PEG derivative (B) having an IOB value in the organic conception diagram of 0.3 to 1.8 and a weight average molecular weight Mw of 300 to 2,500 as measured by GPC versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

((A) Hydroxyalkyl alkyl cellulose)

The hydroxyalkyl alkyl cellulose as component (A) is a nonionic water-soluble cellulose ether. Examples thereof include hydroxypropyl methyl cellulose, hydroxyethyl methyl cellulose, and hydroxyethyl ethyl cellulose. Of these, hydroxypropyl methyl cellulose (referred to as HPMC, hereinafter) and hydroxyethyl methyl cellulose (referred to as HEMC, hereinafter) are preferred from the aspects of meeting both fluidity and bleeding reduction.

As the hydroxyalkyl alkyl cellulose, either a commercially available cellulose or a cellulose prepared by a well-known method may be used. The hydroxyalkyl alkyl cellulose may be used alone or in admixture of two or more depending on a particular purpose.

Of the hydroxyalkyl alkyl celluloses, hydroxypropyl methyl cellulose (HPMC) preferably has a DS of methoxy of 1.00 to 2.20, more preferably 1.30 to 1.90 and a MS of hydroxypropoxy of 0.10 to 0.60, more preferably 0.10 to 0.50. Hydroxyethyl methyl cellulose (HEMC) preferably has a DS of methoxy of 1.00 to 2.20, more preferably 1.30 to 1.90 and a MS of hydroxyethoxy of 0.10 to 0.60, more preferably 0.20 to 0.40. Hydroxyethyl ethyl cellulose (HEEC) preferably has a DS of ethoxy of 1.00 to 2.20, more preferably 1.20 to 2.00 and a MS of hydroxyethoxy of 0.05 to 0.60, more preferably 0.10 to 0.50.

It is noted that the degree of substitution (DS) refers to the average number of alkoxy groups per anhydrous glucose unit. The molar substitution (MS) refers to the average moles of hydroxyalkoxy group per mole of anhydrous glucose. The DS of alkoxy group and the MS of hydroxyalkoxy group of the hydroxyalkyl alkyl cellulose may be determined from conversion of the value measured according to the analysis of DS of hypromellose (hydroxypropyl methyl cellulose) prescribed in the Japanese Pharmacopoeia, 18th Edition.

A 2 wt% aqueous solution of the hydroxyalkyl alkyl cellulose preferably has a viscosity at 20°C of 15 to 450,000 mPa·s, more preferably 50 to 370,000 mPa·s, and even more preferably 80 to 350,000 mPa·s. By using said 2 wt% aqueous solution, preferable imparting a desired viscosity thereto may be ensured. For the viscosity at 20°C of a 2 wt% aqueous solution of a water-soluble cellulose ether, when the viscosity is 600 mPa·s or higher, measurement is made with a single cylinder rotational viscometer corresponding to the rotational viscometer in the viscosity measurement method of the general test prescribed in the Japanese Pharmacopoeia, 18th Edition. When the viscosity is lower than 600 mPa s, measurement is made with a Ubbelohde viscometer corresponding to the capillary viscometer in the viscosity measurement method of the general test prescribed in the Japanese Pharmacopoeia, 18th Edition.

In the case of a low-fluidity concrete like normal concrete, a cellulose ether having a low molecular weight or low viscosity is preferred from the aspect of lowering fluidity. In the case of a high-fluidity concrete where the phenomenon of fluidity drop does not occur, a cellulose ether having a high molecular weight or high viscosity is preferred from the aspect of expense. Specifically, for use in normal concrete, a 2 wt% aqueous solution of the hydroxyalkyl alkyl cellulose preferably has a viscosity at 20°C of 15 to 80,000 mPa·s, more preferably 50 to 50,000 mPa·s, and even more preferably 80 to 35,000 mPa·s. For use in high-fluidity concrete, a 2 wt% aqueous solution of the hydroxyalkyl alkyl cellulose preferably has a viscosity at 20°C of 50,000 to 450,000 mPa·s, more preferably 60,000 to 370,000 mPa·s, and even more preferably 70,000 to 350,000 mPa·s.

((B) Polyethylene glycol derivative)

The PEG derivative as component (B) should have an IOB value in the organic conception diagram of 0.3 to 1.8 and a Mw of 300 to 2,500 as measured by GPC versus polystyrene standards, and contain at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional end group.

[IOB value]

The PEG derivative should have an IOB value in the organic conception diagram of 0.3 to 1.8, preferably 0.7 to 1.2. If the IOB value is less than 0.3, the PEG derivative is less water-soluble. If the IOB value exceeds 1.8, the PEG derivative has a stronger surfactant effect and a poorer defoaming effect, failing to impart frost damage resistance to a hydraulic composition.

As the hydraulic composition becomes less flowing, more air is entrained during mixing step and a stronger defoaming ability is necessary. In this sense, the fluidity of a hydraulic composition is correlated to the IOB value in the organic conception diagram of a PEG derivative.

Specifically, in the case of a hydraulic composition having a slump of 8 to 21 cm as measured by the method of JIS A 1101, the PEG derivative should preferably have an IOB value in the organic conception diagram of 0.3 to 1.4, more preferably 0.7 to 1.4, even more preferably 0.7 to 1.2. In the case of a medium-fluidity concrete having a slump flow of 35 to 50 cm as prescribed in the East/Center/West Japan Expressway tunnel construction management guideline and a high-fluidity concrete having a slump flow of 55 to 75 cm as prescribed in the construction edition of the concrete standard specifications 2017, the PEG derivative should preferably have an IOB value in the organic conception diagram of 0.9 to 1.8, more preferably 0.9 to 1.6.

It is noted that the IOB (Inorganic Organic Balance) in the organic conception diagram is a ratio of an inorganic value (IV) to an organic value (OV) determined from the organic conception diagram. That is, IOB = IV/OV (the same holds true in Examples). The OV and IV of a certain compound are determined by totaling the predetermined values of groups or sites on the compound across the overall molecule. For the IOB, reference should be made to "Approach to emulsion formulation design p.2-9", Nihon Emulsion Co., Ltd., "What is an emulsion formulation design with organic conception diagram?" (Non-Patent Document 1).

The PEG derivative may be used alone or in admixture of two or more depending on a particular purpose. When two or more PEG derivatives are used as component (B), each PEG derivative has an IOB value in the organic conception diagram of 0.3 to 1.8.

[Weight average molecular weight]

The PEG derivative should have a Mw of 300 to 2,500, preferably 500 to 1,300, more preferably 500 to 1,200 as measured by GPC versus polystyrene standards. If Mw is less than 300, the PEG derivative is poorly dispersible in water. If Mw exceeds 2,500, the PEG derivative is unable to reduce the bleeding of a hydraulic composition.

The Mw of a PEG derivative can be measured versus polystyrene standards by GPC using tetrahydrofuran (THF) as a developing solvent. Specifically, Mw is determined by injecting a test solution into a high performance liquid chromatogram equipped with a size exclusion column, measuring an elution time, and comparing the measured value with the calibration curve of the standard solution (the same holds true, hereinafter).

In the PEG derivative, the average addition mole number "n" of ethylenoxy groups ($-C_2H_4O-$, EO) dominating the molecular weight is correlated to the IOB value. Then, like the IOB value, the Mw is correlated to the fluidity of a hydraulic composition. Specifically, in the case of a hydraulic composition having a slump of 8 to 21 cm as measured by the method of JIS A 1101, the PEG derivative preferably has a Mw of 300 to 1,300, more preferably 500 to 1,300, even more preferably 500 to 1,200. In the case of a medium-fluidity concrete having a slump flow of 35 to 50 cm as prescribed in the East/Center/West Japan Expressway tunnel construction management guideline and a high-fluidity concrete having a slump flow of 55 to 75 cm as prescribed in the construction edition of the concrete standard specifications 2017, the PEG derivative preferably has a Mw of 700 to 2,500, more preferably 700 to 1,700.

[Structure of PEG derivative]

The PEG derivative is of asymmetric straight or branched structure containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group (that is, not having any functional group other than -OH group at the end).

In the PEG derivative, the number of $RCOO(C_2H_4O)_n$- in the molecule is at least 1, preferably 1 to 4, most preferably 1.

R is a $C_{10}$-$C_{24}$, preferably $C_{16}$-$C_{22}$ straight or branched monovalent hydrocarbon group. By using said R, improving the fluidity and frost damage resistance of a hydraulic composition and the dispersion of a PEG derivative in water may be ensured. Examples of the monovalent hydrocarbon group R include straight alkyl groups such as lauryl, cetyl, stearyl, behenyl, undecyl, pentadecyl, heptadecyl, and henicosyl; branched alkyl groups such as isostearyl, octyldodecyl, decyltetradecyl, isoheptadecyl, 16-methylhexadecyl, 2-octylundecyl, and 2-decyltridecyl; and straight alkenyl groups such as oleyl. It is preferred from the aspects of availability and handling of a compound that R be selected from straight or branched alkyl groups such as heptadecyl and isoheptadecyl.

The PEG derivative also has an ester bond (-COO-) from the aspect of improving the frost damage resistance of a hydraulic composition.

"n" which is indicative of the average addition mole number of ethylenoxy groups ($-C_2H_4O-$) is an integer of 3 to 40, preferably 5 to 30, more preferably 5 to 20. By using said "n", reducing the bleeding, improving the frost damage resistance and preventing the foaming of a hydraulic composition may be ensured.

The PEG derivative as component (B) is preferably at least one of compounds having the general formulae (B1) and (B2). The compound having formula (B 1) and the compound having formula (B2) are referred to as compounds B1 and B2, respectively.

$$RCOO\text{-}(C_2H_4O)_n\text{-}H \qquad (B1)$$

$$(RCOO\text{-}(C_2H_4O)_{n1})_tR^1((OC_2H_4)_{n2}\text{-}OH)_u \qquad (B2)$$

In formulae (B 1) and (B2), R is each independently a $C_{10}$-$C_{24}$ straight or branched monovalent hydrocarbon group, $R^1$ is a residue obtained from a polyhydric alcohol having 2 to 5 hydroxy groups by eliminating the hydroxy groups, the residue being a di-to penta-valent $C_2$-$C_5$ straight or branched hydrocarbon group, n indicative of the average addition mole number of ethylenoxy groups ($-C_2H_4O-$) is an integer of 3 to 40, t and u each are an integer of 1 to 4, the sum of t and u is an integer of 2 to 5 (corresponding to the number of hydroxy groups on the polyhydric alcohol from which $R^1$ is obtained), n1 and n2 each are an integer of at least 0 (corresponding to the average addition mole number of ethylenoxy groups ($-C_2H_4O-$)), and $n1\times t+n2\times u$ is an integer of 3 to 30.

[Compound B 1]

Compound B1 is a compound of formula (B1) having an IOB value in the organic conception diagram of 0.3 to 1.8 and a Mw of 300 to 2,500 as measured by GPC versus polystyrene standards.

In formula (B1), R is as defined above and each independently a $C_{10}$-$C_{24}$, preferably $C_{16}$-$C_{22}$ straight or branched monovalent hydrocarbon group. By using said R, improving the fluidity and frost damage resistance of a hydraulic composition and the dispersion of a PEG derivative in water may be ensured. Examples of the monovalent hydrocarbon group R are as exemplified above.

In formula (B1), an ester bond (-COO-) is included from the aspect of improving the frost damage resistance of a hydraulic composition, and n is as defined above.

Examples of compound B1 include polyethylene glycol monostearates (the average addition mole number of ethylenoxy groups ($-C_2H_4O-$) is 5, 10, 20 and 30), polyethylene glycol monoisostearates (the average addition mole number of ethylenoxy groups ($-C_2H_4O-$) is 6, 8, 10, 12 and 16), and polyethylene glycol monooleates (the average addition mole number of ethylenoxy groups ($-C_2H_4O-$) is 6 and 10).

Compound B1, which has a melting point of at least 40°C, may be ground into a powder which is ready for use. Compound B 1, which has a melting point of lower than 40°C, is liquid or difficultly-grindable wax-like solid at normal temperature (20$\pm$15°C) and thus awkward to use in powder form. When the average addition mole number of ethylenoxy groups ($-C_2H_4O-$) in formula (B 1) is less than 15, the compound is a ductile solid which is difficult to grind even when its melting point is at least 40°C.

When compound B1 is used in powder form, the powder preferably has an average particle size of 10 to 280 $\mu$m, more preferably 10 to 200 $\mu$m, even more preferably 10 to 150 $\mu$m as measured by the dry laser method. By using said average particle size, preventing a concrete composition from losing fluidity due to poor dissolution may be ensured. Also, the proportion of particles having a particle size of at least 300 $\mu$m is preferably 0 to 10% by volume, more preferably 0 to 3% by volume.

As used herein, the average particle size (D50 or median diameter) of a powder and the volume proportion of particles having a particle size of at least 300 $\mu$m are determined according to the dry laser diffraction method by using a Master Sizer 3000 (Malvern Panalytical Ltd.) or HELOS (Sympatec GmbH), ejecting a powder sample along with compressed air, irradiating laser radiation thereto, measuring the diffraction strength, and calculating a volume base average particle diameter therefrom (the same holds true, hereinafter).

[Compound B2]

Compound B2 is a compound of formula (B2) having an IOB value in the organic conception diagram of 0.3 to 1.8 and a Mw of 300 to 2,500 as measured by GPC versus polystyrene standards.

In formula (B2), R is as defined above and each independently a $C_{10}$-$C_{24}$, preferably $C_{16}$-$C_{22}$ straight or branched monovalent hydrocarbon group. By using said R, improving the fluidity and frost damage resistance of a hydraulic composition and the dissolution of a PEG derivative in water may be ensured. Examples of the monovalent hydrocarbon group R are as exemplified above.

In formula (B2), an ester bond (-COO-) is included from the aspect of improving the frost damage resistance of a hydraulic composition.

In formula (B2), $R^1$ is a residue obtained from a polyhydric alcohol having 2 to 5 hydroxy groups, preferably 2 or 3 hydroxy groups by eliminating the hydroxy groups, the residue being a di- to penta-valent, preferably di- or tri-valent $C_2$-$C_5$

straight or branched hydrocarbon group. If the carbon count is less than 2, i.e., equal to 1, the compound is difficult to synthesize. If the carbon count exceeds 5, there is a possibility that a compound is highly hydrophobic and difficultly soluble in water.

Exemplary polyhydric alcohols include dihydric alcohols (having 2 hydroxy groups) such as 1,2-butanediol and 1,3-butylene glycol, trihydric alcohols (having 3 hydroxy groups) such as glycerin and trimethylol propane, tetrahydric alcohols (having 4 hydroxy groups) such as diglycerin, erythritol, pentaerythritol, sorbitan and methylglucoside, and pentahydric alcohols (having 5 hydroxy groups) such as xylitol and triglycerin. Of these, di- and trihydric alcohols are preferred from the aspect of preventing a hydraulic composition from foaming, with 1,2-butane diol and 1,3-butylene glycol being more preferred.

In formula (B2), t and u each are an integer of 1 to 4, t is preferably 1 from the aspect of bleeding reduction, u is preferably 1 or 2 from the aspect of preventing a hydraulic composition from foaming. The sum of t and u (i.e., t+u) is an integer of 2 to 5, corresponding to the number of hydroxy groups on the polyhydric alcohol from which $R^1$ is obtained. The sum (t+u) is more preferably 2 or 3, most preferably 2 from the aspect of preventing a hydraulic composition from foaming.

In formula (B2), n1 and n2 each indicative of the average addition mole number of ethylenoxy groups ($-C_2H_4O-$) are an integer of at least 0, and $n1\times t+n2\times u$ is an integer of 3 to 30, preferably 5 to 30, more preferably 8 to 20, even more preferably 10 to 20.

Examples of compound B2 include PEG-10BG isostearate (total (n1+n2) of average addition mole numbers of ethylenoxy groups ($-C_2H_4O-$) is 10), PEG-15BG isostearate (total (n1+n2) of average addition mole numbers of ethylenoxy groups ($-C_2H_4O-$) is 15), PEG-20BG isostearate (total (n1+n2) of average addition mole numbers of ethylenoxy groups ($-C_2H_4O-$) is 20), and PEG-25BG isostearate (total (n1+n2) of average addition mole numbers of ethylenoxy groups ($-C_2H_4O-$) is 25).

Compound B2 is liquid or difficultly-grindable wax-like solid at normal temperature ($20\pm15°C$) and thus awkward to use in powder form.

The PEG derivative may be used without any limitation independent of whether it is solid or liquid. When a PEG derivative has a melting point of lower than 40°C, or the average addition mole number of ethylenoxy groups ($-C_2H_4O-$) in formula (B1) is less than 15, the PEG derivative is preferably used as a solution in water and/or liquid water-reducing agent to be described later.

In the thickener for hydraulic compositions, a weight ratio of component (A) and component (B), that is, A:B is preferably from 95:5 to 20:80, more preferably from 93:7 to 30:70, even more preferably from 90:10 to 40:60. By using said weight ratio of component (A) and component (B), preferable improving frost damage resistance, fluidity and bleeding reduction may be ensured.

(Other components)

In addition to components (A) and (B), the thickener may contain other components such as a water repellent, gum, and defoamer. These other components may be introduced as being contained in the hydraulic composition. Particularly when the other components are liquid, they are preferably used as a solution or dispersion in water which is used in preparing a thickener-containing additive for hydraulic compositions or a hydraulic composition.

[Water repellent]

The water repellent used herein is a substance capable of increasing a contact angle with water to impart water-repelling properties. The water repellent is not particularly limited as long as it is commonly used in conventional hydraulic compositions. Examples include hydrocarbons such as liquid paraffin, squalane, paraffin, and vaseline; waxes such as beeswax, jojoba oil, and carnauba wax; triglycerides such as glyceryl triisostearate and glyceryl trioctanoate; ester oils such as isocetyl myristate and cetyl palmitate; higher alcohols such as cetanol and stearyl alcohol; plant oils such as olive oil and castor oil; fatty acids such as stearic acid; and fatty acid salts such as calcium stearate, sodium stearate, magnesium stearate, calcium isostearate, sodium isostearate, and magnesium isostearate. Inter alia, fatty acid salts are preferred, with calcium stearate being more preferred from the aspect of reducing the addition amount. For example, calcium stearate is commercially available from FUJIFILM Wako Pure Chemical Corp.

From the aspect of handling, the water repellent is preferably added in powder form.

When used, the water repellent is preferably added in an amount of 0.01 to 30% by weight, more preferably 1.8 to 20% by weight based on the thickener. When the thickener is added to a hydraulic composition (specifically concrete composition), the amount of the water repellent added per cubic meters ($m^3$) of the hydraulic composition is preferably 0.05 to 200 $g/m^3$, more preferably 10 to 100 $g/m^3$. By adding said amount of the water repellent, preferable imparting water repellency may be ensured.

[Gum]

The gum used herein is not particularly limited as long as it is commonly used in conventional hydraulic compositions. Among others, diutan gum, welan gum, xanthan gum, and gellan gum are preferred. By using said gum, preferable both fluidity and bleeding reduction of a hydraulic composition may be ensured. The gum may be used alone or in admixture.

Diutan gum is composed by sugar units of D-glucose, D-glucuronic acid, D-glucose with L-rhamnose, and two L-rhamnoses, and commercially available, for example, under the trade name of KELCO-CRETE-DG-F from CP Kelco Inc. Welan gum has a backbone consisting of D-glucose, D-glucuronic acid and L-rhamnose in a ratio of 2:2:1, to which L-rhamnose and L-mannose side chains are attached, and is commercially available, for example, under the trade name of CP KELCO K1A-96 from CP Kelco Inc. Xanthan gum has a backbone of β-1,4-bond D-glucose like cellulose, with side chains of two mannoses and one glucuronic acid, and is commercially available, for example, under the trade name of KELZAN from Sansho Co., Ltd. Gellan gum is a hetero-polysaccharide consisting of four repeating units of D-glucose, D-glucuronic acid, and L-rhamnose in a ratio of 2:1:1, and is commercially available, for example, under the trade name of KELCOGELAFT from CP Kelco Inc.

The gum may be added either in powder form or in aqueous solution form. From the aspect of handling, the gum is preferably added in powder form.

When used, the gum is preferably added in an amount of 0.004 to 15% by weight, more preferably 0.0125 to 12.5% by weight based on the thickener. When the thickener is added to a hydraulic composition (specifically concrete composition), the amount of the gum added per cubic meters ($m^3$) of the hydraulic composition is preferably 5 to 100 $g/m^3$, more preferably 5 to 30 $g/m^3$, even more preferably 10 to 30 $g/m^3$. By adding said amount of the gum, preferable both fluidity and bleeding reduction may be ensured.

[Defoamer]

A defoamer may be added, if necessary, for imparting strength to a hydraulic composition. Suitable defoamers include oxyalkylene, silicone, alcohol, and fatty acid ester-based defoamers from the aspect of defoaming ability. Inter alia, oxyalkylene-based defoamers are preferred from the aspect of frost damage resistance.

Examples of the oxyalkylene-based defoamer include polyoxyalkylenes such as (poly)oxyethylene (poly) oxypropylene adducts; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and oxyethylene oxypropylene adducts to higher alcohols of at least 8 carbon atoms or secondary alcohols of 12 to 14 carbon atoms; (poly)oxyalkylene (alkyl) aryl ethers such as polyoxypropylene phenyl ether and polyoxyethylene nonylphenyl ether; acetylene ethers obtained from addition polymerization of alkylene oxides to acetylene alcohols, for example, 2,4,7,9-tetramethyl-5-decyne-4,7-diol, 2,5-dimethyl-3-hexyne-2,5-diol, and 3-methyl-1-butyn-3-ol; (poly)oxyalkylene fatty acid esters such as diethylene glycol oleate, diethylene glycol laurate, and ethylene glycol distearate; (poly)oxyalkylene sorbitan fatty acid esters such as polyoxyethylene sorbitan monolaurate and polyoxyethylene sorbitan trioleate; (poly)oxyalkylene alkyl (aryl) ether sulfuric acid ester salts such as polyoxypropylene methyl ether sodium sulfate and polyoxyethylene dodecylphenol ether sodium sulfate; (poly)oxylalkylene alkyl phosphoric acid esters such as (poly)oxyethylene stearyl phosphate; (poly)oxyalkylene alkyl amines such as polyoxyethylene lauryl amine; and polyoxyalkylene amides.

Examples of the silicone-based defoamer include dimethylsilicone oil, silicone paste, silicone emulsions, organic modified polysiloxanes (e.g., polyorganosiloxanes such as dimethylpolysiloxane), and fluorosilicone oil.

Examples of the alcohol-based defoamer include octyl alcohol, 2-ethylhexyl alcohol, hexadecyl alcohol, acetylene alcohol, and glycols.

Examples of the fatty acid ester-based defoamer include glycerol monolicinolate, alkenyl succinate derivatives, sorbitol monolaurate, sorbitol trioleate, and natural wax.

The defoamer may be added either in powder or liquid form. From the aspect of handling, the defoamer is preferably added in powder form.

When used, the defoamer is preferably added in an amount of 0.0025 to 15% by weight, more preferably 0.008 to 12.5% by weight based on the thickener. When the thickener is added to a hydraulic composition (specifically concrete composition), the amount of the defoamer added per cubic meters ($m^3$) of the hydraulic composition is preferably 5 to 100 $g/m^3$, more preferably 5 to 30 $g/m^3$, even more preferably 10 to 30 $g/m^3$. By adding said amount of the defoamer, preferable strength of the hydraulic composition may be ensured.

It is noted that the total amount of component (A), component (B), water repellent, gum, and defoamer is 100% by weight of the thickener.

<Thicker-containing additive>

Another embodiment of the invention is a thicker-containing additive for hydraulic compositions, comprising the thickener defined above and (C) water and/or a liquid water-reducing agent.

When the thickener is blended in a hydraulic composition, the thickener in powder form may be blended as such. When component (B) is difficult to grind because its melting point is lower than 40°C or the average addition mole number of ethylenoxy groups ($-C_2H_4O-$) in formula (B1) is less than 15 (that is, it is difficult to blend the thickener in powder form), it is recommended that the thickener or the components of the thickener is dissolved or dispersed in (C) water and/or liquid water-reducing agent, prior to blending, to prepare a thickener-containing additive, and the resulting additive is blended in a hydraulic composition. The water and/or liquid water-reducing agent may be temperature controlled in preparing the thickener-containing additive.

Of component (C), pure water, tap water, and "water other than tap water" prescribed in JIS A 5308 may be used as the water.

Suitable water-reducing agents include liquid lignin, polycarboxylic acid, and melamine based agents.

Exemplary of the lignin are lignin sulfonic acid salts and derivatives thereof. Exemplary of the polycarboxylic acid are polycarboxylic acid ethers, composites of polycarboxylic acid ethers with crosslinked polymers, composites of polycarboxylic acid ethers with oriented polymers, composites of polycarboxylic acid ethers with highly modified polymers, polyether carboxylic acid-based polymers, maleic acid copolymers, maleate copolymers, maleic acid derivative copolymers, carboxyl-containing polyethers, sulfone-terminated polycarboxylate-containing multiple polymers, polycarboxylic acid-based graft copolymers, polycarboxylic acid-based compounds, and polycarboxylic acid ether-based polymers. Exemplary of the melamine are melamine-sulfonic acid-formaldehyde condensates, melamine-sulfonate condensates, and melamine-sulfonate-polyol condensates.

The content of component (A) in the thickener-containing additive is preferably 0.005 to 20% by weight, more preferably 0.008 to 10% by weight, even more preferably 0.01 to 5% by weight. The content of component (B) in the thickner-containing additive is preferably 0.005 to 15% by weight, more preferably 0.008 to 10% by weight, even more preferably 0.01 to 5% by weight. The ratio of components (A) and (B), expressed as a weight ratio (A:B), is in the range preferably from 95:5 to 20:80, more preferably from 93:7 to 30:70, even more preferably from 90:10 to 40:60. By using said ratio of components (A) and (B), preferable improving frost damage resistance, fluidity, and bleeding reduction may be ensured.

The content of water and/or liquid water-reducing agent (C) is preferably 70.0 to 99.98% by weight, more preferably 85.0 to 99.97% by weight, even more preferably 90 to 99.96% by weight of the thickener-containing additive. The total amount of component (C), components (A) and (B) and other components (to be described later) is 100% by weight of the thickener-containing additive.

When the other or optional components are added, the content of the water repellent is preferably 0.002 to 8% by weight, more preferably 0.005 to 5% by weight; the content of the gum is preferably 0.001 to 2% by weight, more preferably 0.005 to 1% by weight; and the content of the defoamer is preferably 0.001 to 5% by weight, more preferably 0.005 to 3% by weight.

<Hydraulic composition>

In a further aspect, the invention provides a hydraulic composition which encompasses the following three embodiments:

a hydraulic composition (i) comprising the thickener, a hydraulic substance (specifically cement), and water and/or liquid water-reducing agent;
a hydraulic composition (ii) comprising the thickener-containing additive, a hydraulic substance (specifically cement), and water; and
a hydraulic composition (iii) comprising (A) a hydroxyalkyl alkyl cellulose, (B) a PEG derivative having an IOB value in the organic conception diagram of 0.3 to 1.8 and a Mw of 300 to 2,500 as measured by GPC versus polystyrene standards, and containing at least one $RCOO(C_2H_4O)_n-$ wherein R is a $C_{10}$-$C_{24}$ straight or branched monovalent hydrocarbon group and n is an integer of 3 to 40 in the molecule and a polyethylene glycol end OH or -OH group as a functional group, a hydraulic substance (specifically cement), and water and/or a liquid water-reducing agent.

It is noted that component (B) may be added in powder form or in solution or dispersion form after being dissolved or dispersed in water and/or a liquid water-reducing agent.

Exemplary applications of the hydraulic composition include concrete compositions, mortar compositions and cement paste compositions.

The concrete composition contains a fine aggregate (specifically sand), a coarse aggregate (specifically gravel),

and a water-reducing agent as well as the hydraulic composition. Preferably, the concrete composition has a slump of 8 to 21 cm as measured by the method of JIS A 1101 and a compressive strength of 18 to 45 $N/mm^2$, more preferably 25 to 40 $N/mm^2$ as measured by the method of JIS A 1108 at an age of 28 days.

Examples of the concrete composition include normal concrete, under-water concrete, spray concrete, cold weather concrete, hot weather concrete, mass concrete, light-weight concrete, seawater-affected concrete, short fiber-reinforced concrete, dam concrete, pavement concrete, and prestressed concrete.

The mortar composition contains a fine aggregate (specifically sand) as well as the hydraulic composition. Examples of the mortar include tiling mortar, repairing mortar, and self-leveling agents.

The cement paste composition consists of the hydraulic composition and examples thereof include adhesives to tile-related inorganic building materials, and grout for filling the gap between members.

The amount of the thickener added to hydraulic composition (i) or the amount of the thickener-containing additive added to hydraulic composition (ii) per cubic meters ($m^3$) of the hydraulic composition (specifically concrete composition) is preferably 0.025 to 10.0 $kg/m^3$, more preferably 0.05 to 5.0 $kg/m^3$. By adding said amount of the thickener or thickener-containing additive, preferable fluidity, improving the bleeding reduction and frost damage resistance may be ensured.

The amount of component (A) or hydroxyalkyl alkyl cellulose added per cubic meters ($m^3$) of the hydraulic composition (specifically concrete composition) is preferably 10 to 1,500 $g/m^3$, more preferably 15 to 1,000 $g/m^3$. By adding said amount of component (A), preferable both fluidity and bleeding reduction of the hydraulic composition may be ensured.

The amount of component (B) added per cubic meters ($m^3$) of the hydraulic composition (specifically concrete composition) is preferably 10 to 300 $g/m^3$, more preferably 10 to 150 $g/m^3$. By adding said amount of component (B), preferable improving the fluidity, bleeding reduction and frost damage resistance of the hydraulic composition may be ensured.

The hydraulic substance refers to cement and an inorganic powder-based admixture among components to be blended in the preparation of the hydraulic composition. Cement may be used alone or in combination with an admixture as long as desired strength, durability and other properties are obtained. Examples of the cement include Portland cement (e.g., normal Portland cement, high-early-strength Portland cement, ultrahigh-early-strength Portland cement, moderate-heat Portland cement), mix cement (e.g., blast-furnace slag cement, silica cement, fly-ash cement), and special cement (e.g., alumina cement). Examples of the admixture include slag, fly-ash, fumed silica, and finely divided lime.

When the hydraulic composition is concrete, the amount of the hydraulic substance added is preferably 270 to 550 $kg/m^3$ of concrete. When the hydraulic composition is mortar, the amount of the hydraulic substance added is preferably 300 to 900 $kg/m^3$ of mortar. When the hydraulic composition is cement paste, the amount of the hydraulic substance added is preferably 900 to 1,600 $kg/m^3$ of cement paste. These amounts are preferred from the aspect of strength.

Exemplary of the water are tap water and "water other than tap water" prescribed in JIS A 5308. The unit amount of water is preferably up to 185 $kg/m^3$ of concrete.

The hydraulic composition preferably has a water/hydraulic substance ratio of 30 to 70% by weight, more preferably 35 to 65% by weight. By using said water/hydraulic substance ratio, preferable preventing material separation therein may be ensured.

The hydraulic composition may further contain an aggregate if necessary. Suitable aggregates include fine aggregates and coarse aggregates. Examples of the fine aggregate include river sand, pit sand, land sand, crushed sand, and silica sand. The particle size (maximum size) of the fine aggregate is preferably up to 5 mm. Examples of the coarse aggregate include river gravel, pit gravel, land gravel, and crushed stone. The particle size (maximum size) of the coarse aggregate is larger than that of the fine aggregate, and preferably up to 40 mm, more preferably up to 25 mm.

When the hydraulic composition is concrete, the content of the fine aggregate is preferably 600 to 1,100 kg, more preferably 700 to 1,000 kg per $m^3$ of the concrete. When the hydraulic composition is mortar, the content of the fine aggregate is preferably 900 to 1,600 kg, more preferably 1,000 to 1,400 kg per $m^3$ of the mortar.

When the hydraulic composition is concrete, the content of the coarse aggregate is preferably 600 to 1,000 kg, more preferably 650 to 900 kg per $m^3$ of the concrete.

When the hydraulic composition is concrete, the proportion of fine aggregate, as defined below, is preferably 30 to 65% by volume, more preferably 35 to 60% by volume, even more preferably 40 to 55% by volume based on the total volume of the aggregates. By using said proportion of fine aggregate, preferable retention of fluidity or sufficient strength may be ensured.

$$\text{Fine aggregate proportion(vol\%)} = (\text{volume of fine aggregate})/(\text{volume of fine aggregate} + \text{volume of coarse aggragate}) \times 100$$

Further, another water-reducing agent may be added to the hydraulic composition besides the liquid water-reducing agent, if necessary, for retaining high fluidity with a smaller amount of water. The amount of the water-reducing agent per $m^3$ of the concrete composition is preferably 0.50 to 2.50% by weight, more preferably 0.5 to 1.0% by weight based on the unit cement amount per $m^3$. Two or more water-reducing agents may be used when the desired fluidity is not obtained.

If necessary, an air-entraining (AE) agent may be added to the hydraulic composition for providing the desired air content and rendering the hydraulic composition durable. Suitable AE agents include anionic surfactants, cationic surfactants, nonionic surfactants, ampholytic surfactants, and rosin-based surfactants. Examples of the anionic surfactant include resin acid salt, carboxylic acid, sulfate, sulfonic acid, and phosphate type surfactants. Examples of the cationic surfactant include amine salt, primary amine salt, secondary amine salt, tertiary amine salt, and quaternary amine salt type surfactants. Examples of the nonionic surfactant include ester, ester-ether, ether, and alkanolamide type surfactants. Examples of the ampholytic surfactant include amino acid and sulfobetaine type surfactants. Examples of the rosin-based surfactant include abietic acid, neoabietic acid, palustric acid, pimaric acid, isopimaric acid, and dehydroabetic acid.

The amount of the AE agent used per cubic meters of the concrete composition is preferably 0.0001 to 0.050% by weight, more preferably 0.0001 to 0.01% by weight based on the unit cement amount per $m^3$.

If necessary, a setting accelerator such as calcium chloride, lithium chloride or calcium formate and a setting retarder such as sodium citrate or sodium gluconate may be added to the hydraulic composition for the purposes of managing the physical properties of a fresh hydraulic composition (fresh concrete, fresh mortar or fresh cement paste) immediately after mixing.

The amount of the setting retarder used is preferably 0.3 to 1.2% by weight based on the unit cement amount per $m^3$.

Further, hauyne and lime-based expansive additives may be added to the hydraulic composition, if necessary, for the purposes of preventing cracking by shrinkage upon setting and drying, and preventing cracking by thermal stresses associated with the heat of hydration of cement.

With respect to the amount of air voids in the hydraulic composition, it is preferred for enhancing frost damage resistance to reduce large air voids having a diameter of more than 500 $\mu$m to 2,000 $\mu$m and to increase small air voids having a diameter of more than 50 $\mu$m to 500 $\mu$m. As an index for evaluating the size of air voids, a coefficient of air void spacing is used. It is believed that the frost damage resistance is better when the coefficient of air void spacing is lower than 250 $\mu$m. The coefficient of air void spacing is measured by an air void analyzer as will be described in Examples. Since the coefficient of air void spacing varies with the increasing or decreasing amount of air in evaluating the coefficient of air void spacing, evaluation is preferably made after unifying the amounts of air in concrete and mortar.

<Method of preparing hydraulic composition>

The method of preparing the hydraulic composition according to the invention is a method of preparing a hydraulic composition comprising (A) a hydroxyalkyl alkyl cellulose, (B) a PEG derivative, a hydraulic substance, and water and/or liquid water-reducing agent, component (B) being a PEG derivative having an IOB value in the organic conception diagram of 0.3 to 1.8 and a Mw of 300 to 2,500 as measured by GPC versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group, the method involving

step (I) of mixing the PEG derivative (B) with component (A) or hydroxyalkyl alkyl cellulose to prepare a thickener,
step (II) of adding at least part of water and/or liquid water-reducing agent to the thickener to prepare a thickener-containing additive, or
step (III) of furnishing (B) PEG derivative alone, and
the step of admitting the thickener of step (I), the thickener-containing additive of step (II) or the PEG derivative of step (III) in the step of mixing components of the hydraulic composition.

The preferred method of preparing the hydraulic composition according to the invention is a method of preparing a hydraulic composition which is a concrete composition further comprising a fine aggregate, a coarse aggregate, and a water-reducing agent, the concrete composition having a slump of 8 to 21 cm as measured by the method of JIS A 1101 and a compressive strength of 18 to 45 N/mm$^2$ as measured by the method of JIS A 1108 at an age of 28 days.

((I) Preparation of thickener)

The thickener for hydraulic compositions may be prepared by mixing the above-defined components, that is, hydroxyalkyl alkyl cellulose (A), PEG derivative (B), and other components in the standard way. The mixing technique is not particularly limited. For example, a mixer may be used.

The order of admitting components during mixing is not particularly limited. One exemplary procedure involves

admitting component (A) in powder form into a mixer, agitating it, then admitting component (B) and optionally other components, and agitating the contents. At this point of time, the PEG derivative (B) may be added either in powder or liquid form. From the aspects of handling and dissolution in preparing a hydraulic composition, it is preferred that components (A) and (B) be in powder form. That is, the thickener is preferably in powder form.

In the method of preparing the hydraulic composition, the thickener is preferably prepared by further adding a water repellent in step (I).

((II) Preparation of thickener-containing additive)

The thickener-containing additive is obtained by adding at least part of water and/or liquid water-reducing agent as component (C) to the thickener. The thickener-containing additive may be prepared, for example, by heating water and/or liquid water-reducing agent which constitutes part or all of component (C) at a temperature of 80 to 95°C, adding (A) hydroxyalkyl alkyl cellulose, (B) PEG derivative, the remainder of component (C) (water and/or liquid water-reducing agent) if any, and other components to the water (hot water) and/or liquid water-reducing agent at the elevated temperature, agitating and mixing them for dissolution, cooling to room temperature (25±15°C), and further agitating the contents for 15 minutes to 1 hour. The mixing technique is not particularly limited. For example, a mixer may be used.

(Step of mixing components of hydraulic composition)

The method of preparing the hydraulic composition involves at least the step of mixing the components of the hydraulic composition and the steps of admitting the thickener, thickener-containing additive or PEG derivative (B) to the step of mixing the components of the hydraulic composition, and mixing the contents.

The step of mixing the components of the hydraulic composition preferably includes the steps of mixing all powdery components other than water and/or liquid water-reducing agent in a dry state, adding water and/or liquid water-reducing agent to the dry mix, and further mixing the contents. Preferably, a powdery component among the thickener, the thickener-containing additive, and the PEG derivative (B), that is, either one of the thickener and the PEG derivative (B) in powder form is admitted to the dry mixing step. Also preferably, a liquid component among the thickener, the thickener-containing additive, and the PEG derivative (B), that is, either one of the thickener-containing additive and the PEG derivative (B) in liquid form is admitted to the mixing step.

For example, a forced two-impeller mixer is charged with a hydraulic substance as powdery material, optionally aggregates (fine and coarse aggregates), further optionally a defoamer, and the thickener, followed by dry mixing. Thereafter, water and/or liquid water-reducing agent as liquid material is added to the dry mix and mixed to form hydraulic composition (i). Alternatively, a forced two-impeller mixer is charged with a hydraulic substance as powdery material, optionally aggregates (fine and coarse aggregates), further optionally a defoamer, followed by dry mixing. Thereafter, water and the thickener-containing additive as liquid material are added to the dry mix and mixed to form hydraulic composition (ii). Also, a forced two-impeller mixer is charged with (A) a hydroxyalkyl alkyl cellulose, (B) a PEG derivative having an IOB value in the organic conception diagram of 0.3 to 1.8 and a Mw of 300 to 2,500 as measured by GPC versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group, in powder form, a hydraulic substance, optionally aggregates (fine and coarse aggregates), further optionally a defoamer, followed by dry mixing. Thereafter, water and/or liquid water-reducing agent as liquid material is added to the dry mix and mixed to form hydraulic composition (iii). Alternatively, a forced two-impeller mixer is charged with a hydraulic substance as powdery material, optionally aggregates (fine and coarse aggregates), further optionally a defoamer, followed by dry mixing. Thereafter, an aqueous solution or dispersion obtained by dissolving or dispersing component (B) in water and/or liquid water-reducing agent and water and/or liquid water-reducing agent as liquid material are added to the dry mix and mixed to form hydraulic composition (iii).

In the above-mentioned way, there are obtained the thickener capable of improving the fluidity, bleeding, and frost damage resistance of hydraulic compositions, the thickener-containing additive, and the hydraulic composition.

## EXAMPLES

Examples of the invention are given below by way of illustration and not by way of limitation.

I) Preparation of thickener or thickener-containing additive

A thickener or thickener-containing additive for hydraulic compositions were prepared using the following ingredients.

<Ingredients>

(1) Water: tap water

(2) Hydroxyalkyl alkyl cellulose (CE): specified in Table 1

(3) PEG derivative: specified in Table 2

<Calculation of IOB value>

The IOB (Inorganic Organic Balance) value of a PEG derivative was determined as follows.

The organic value (OV) and inorganic value (IV) of a compound of interest were determined by totaling the predetermined values of groups or sites on the compound across the overall molecule. For the predetermined values of groups or sites on the compound, reference was made to "Approach to emulsion formulation design p.2-9", Nihon Emulsion Co., Ltd., "What is an emulsion formulation design with organic conception diagram" (Non-Patent Document 1), FIG. 2 "Exemplary calculation method" on p.2 and Annexed Table 1 "Inorganic Group, Organic Group and Organic/Inorganic Group Table".

The IOB value was obtained by applying the IV and OV to the following formula.

$$\text{IOB value} = \text{IV/OV}$$

One calculation example is shown below.

B1: In the case of polyethylene glycol monostearate ($C_{17}H_{35}COO(C_2H_4O)_{10}H$), the structural formula was determined, like [$C_{17}H_{35}CO{\cdot}OCH_2CH_2(OCH_2CH_2)_{10-1}$-OH], by deforming -$C_2H_4$- in the first one of repeating units ($C_2H_4O$) and -COO- bonded thereto to (-COOR-) -$OCH_2CH_2$- and deforming -O-$(C_2H_4O)_{10-1}H$ to -$(OCH_2CH_2)_{10-1}$-OH in $COO(C_2H_{40})_{10}H$.

- OV = 38 (number of C) $\times$ 20 (OV of C) = 760
- IV = 60 (IV of -COOR) + 75 (IV of -$OCH_2CH_2$) $\times$ 9 (number of -$OCH_2CH_2$) + 100 (IV of -OH) = 83 5

From the above-mentioned values, an IOB value of 835/760 $\cong$ 1.10 was obtained.

<Measurement of Mw>

The Mw was measured as a weight average molecular weight by GPC analysis using a GPC system HLC-8220GPC (Tosoh Corp.) with a detector (differential refraction index meter, RI-71S by Showa Denko K.K.), columns (TSK-gel G5000HxL (7.8×300 mm)×1, G4000HxL (7.8×300 mm)×1, G3000HxL (7.8×300 mm)×1, and G2000HxL (7.8×300 mm)×1 (Tosoh Corp.), and tetrahydrofuran (THF) as developing solvent and computing relative to polystyrene standards.

A test solution was prepared by sampling an aliquot (~0.01 g) of a PEG derivative and adding ~10 mL of THF to dissolve the PEG derivative. Each (100 μL) of the test solution and polystyrene standard (Tosoh Corp.) was injected into the GPC system. Measurement was made by feeding THF as mobile phase at a flow rate of 1.0 mL/min and a column temperature of 40°C. The results thus obtained were analyzed by 480II Data Station GPC program (System Instruments Co., Ltd.). A molecular weight was calculated by AUTO Fitting using the extrapolation curve method (primary). A molecular weight was estimated using a calibration curve drawn on the basis of elution times of polystyrene solutions of molecular weight standards and molecular weights.

(4) Calcium stearate (StCa): reagent by FUJIFILM Wako Pure Chemical Corp.

(5) Defoamer 1 (DF-1): polyether-based defoamer I (silica impregnated with defoamer)

Table 1

| Designation | Physical properties | Manufacturer |
|---|---|---|
| HPMC-1 | type: HPMC, 2 wt% aqueous solution viscosity: 98 mPa s, DS of methoxy group: 1.44, MS of hydroxypropoxy group: 0.17 | Shin-Etsu Chemical Co., Ltd. |
| HPMC-2 | type: HPMC, 2 wt% aqueous solution viscosity: 73,000 mPa·s, DS of methoxy group: 1.45, MS of hydroxypropoxy group: 0.20 | |
| HPMC-3 | type: HPMC, 2 wt% aqueous solution viscosity: 32,100 mPa s, DS of methoxy group: 1.42, MS of hydroxypropoxy group: 0.20 | |
| HPMC-4 | type: HPMC, 2 wt% aqueous solution viscosity: 400 mPa s, DS of methoxy group: 1.73, MS of hydroxypropoxy group: 0.15 | |
| HEMC | type: HPMC, 2 wt% aqueous solution viscosity: 4800 mPa s, DS of methoxy group: 1.39, MS of hydroxyethoxy group: 0.21 | |

Table 2

| Characteristic structure | polyethylene glycol derivative | | | |
|---|---|---|---|---|
| Manufacturer | Nippon Emulsion Co., Ltd. | | | |
| Compound name | B1: polyethylene glycol monostearate (average addition mole number of ethylenoxy groups 10) | B1: polyethylene glycol monostearate (average addition mole number of ethylenoxy groups 20) | B1: polyethylene glycol monoisostearate (average addition mole number of ethylenoxy groups 6) | B2: PEG-10BG isostearate (average addition mole number of ethylenoxy groups 10) |
| Product name | 810 | 820 | PEIS-6 | BGIS110 |
| Designation | PEG-10 stearate | PEG-20 stearate | PEG-6 isostearate | PEG-10BG isostearate |
| Compound | See formula PEG-10 below | See formula PEG-20 below | See formula PEG-6 below | See formula PEG-10BG below |
| Carbon count of R (substituent) | 17 (heptadecyl group) | 17 (heptadecyl group) | 17 (isoheptadecyl group) | 17 (isoheptadecyl group) |
| Average addition mole number n of ethylenoxy groups | 10 | 20 | 6 | 10 |
| IOB value | 1.10 | 1.37 | 0.91 | 0.96 |
| Mw | 730 | 1,200 | 550 | 780 |
| Melting point (°C) | 41 | 40 | liquid at RT | liquid at RT |
| Solubility | emulsifiable/dispersible | soluble | emulsifiable/dispersible | emulsifiable/dispersible |
| State | waxy solid | waxy solid | liquid | liquid |

(PEG-10) $C_{17}H_{35}COO(C_2H_40)_{10}H$

(PEG-20) $C_{17}H_{35}COO(C_2H_4O)_{20}H$

(continued)

(PEG-6) iso-$C_{17}H_{35}COO(C_2H_4O)_6H$

(PEG-10BG) 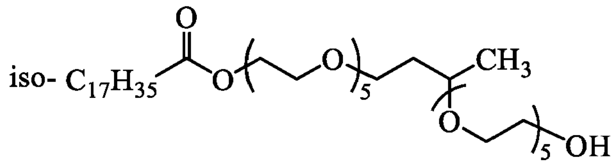

[Preparation of thickener-containing additive]

In a 5000-mL beaker combined with an agitator NZ-1000 (Tokyo Rikakikai Co., Ltd.), 2,480 g of hot water at 90°C was agitated at 100 rpm. Selected ingredients whose type and amount (wt%) are shown in Table 3A were admitted into hot water in such amounts that the total weight of the ingredients was 20 g. The contents were agitated at room temperature (25°C) for 60 minutes, yielding a thickener-containing additive in the form of an aqueous solution containing 1% by weight of the thickener (Examples 1 to 8 and 10 to 13).

[Preparation of thickener]

A thickener was prepared by mixing selected ingredients whose type and amount (wt%) are shown in Table 3A. PEG-20 stearate was furnished by previously grinding PEG-20 stearate on Wonder Blender WB-1 (As One Corp.) for 5 seconds, classifying the ground material through a sieve with an opening of 300 μm, and collecting a fraction of particles having an average particle size (D50) of 148 μm wherein the proportion of particles having a particle size of 300 μm or more was 0.3% by volume (Example 9, Comparative Examples 1 to 3).

[Separate addition]

The ingredients shown in Table 3A were added, without any mixing or preparing step, to a concrete composition during its preparation (Example 14). Specifically, PEG-10 stearate was added as liquid material and the remaining ingredients were added as powder material. Further specifically, PEG-10 stearate was prepared as a dilution by previously mixing pure water and coarse particulate PEG derivative with a size of 1 mm to several centimeters in a weight ratio of 99: 1, and agitating the mixture to form a 100-fold dilution of PEG derivative. Notably, the pure water for PEG derivative dilution corresponds to water as component (C) in the thickener-containing additive.

II) Preparation of hydraulic composition (concrete composition)

A hydraulic composition (concrete composition) as shown in Table 3B was prepared using the following ingredients.

<Ingredients>

(1) Thickener-containing additive or thickener: Additive Nos. 1 to 8, 10 to 13, Thickener No. 9, Comparative Thickener Nos. 1 to 3 (see Table 3A)
(2) Water (W): tap water
(3) Hydroxyalkyl alkyl cellulose (CE): HPMC-1 in Table 1
(4) PEG derivative: PEG-10 stearate (used as 100-fold dilution) in Table 2
(5) Cement (C): normal Portland cement (density 3.16 g/cm$^3$, Taiheiyo Cement Corp.)
(6) AE water-reducing agent (WR): lignin sulfonic acid (Master Pozzolith No. 70 used as 4-fold dilution, BASF Pozzolith Ltd.)
(7) High performance AE water-reducing agent (SP): polycarboxylate copolymer (Chupole HP-11, Takemoto Oil & Fat Co., Ltd.) (C × 0.85%)
(8) AE agent: resin acid salt type anionic surfactant (AE-300 used as 100-fold dilution, Takemoto Oil & Fat Co., Ltd., 1A = C × 0.001%)
(9) Defoamer II (DF-2): polyether-based defoamer (used as 100-fold dilution, IT = C × 0.002%)
(10) Fine aggregate (S): land sand (from Shinano River, surface dry density: 2.60 g/cm$^3$, water absorption percentage:

2.07%, coarse particle percentage: 2.79, solid volume percentage: 66.3%)

(11) Coarse aggregate (G): ground stone (20-5 mm, surface dry density: 2.69 g/$cm^3$, water absorption percentage: 1.35%, coarse particle percentage: 6.55, solid volume percentage: 58.5%)

A test was carried out with the concrete blending shown in Table 4, i.e., under conditions: a water/cement ratio 55.0% and a fine aggregate percentage 52.9%, water 175 kg/$m^3$, cement 318 kg/$m^3$, fine aggregate 931 kg/$m^3$, and coarse aggregate 861 kg/$m^3$ as unit content.

A hydraulic composition (concrete composition) was prepared according to the concrete formulation (addition components) shown in Table 3B. In Table 3B, the amount of component (A), component (B), calcium stearate and defoamer I added as the thickener-containing additive or the thickener is grams per cubic meters ($m^3$) of the concrete composition, i.e., g/$m^3$; the amount of AE water-reducing agent and high-performance AE water-reducing agent added is an amount (C $\times$ %) corresponding to wt% based on the cement (C); the amount of AE agent added is the described amount (unit A: amount of 1A corresponding to 0.001 wt% of the cement (C)). The amount of defoamer II added is the described amount (unit T: amount of 1T corresponding to 0.002 wt% of the cement (C)).

Notably, the amount of AE agent added and if used, the amount of defoamer II added were adjusted so as to give an air content of 4.5$\pm$0.5%.

In Examples 9 and 10 and Comparative Example 2, the formulation of Example 1 was changed as below for slump adjustment. Specifically, in Example 9, the amount of AE water-reducing agent added was changed so as to adjust to a slump of 13.0$\pm$ 1.0 cm. In Example 10, high performance AE water-reducing agent was further added as liquid material to change the amount of AE water-reducing agent added so as to adjust to a slump of 20.0$\pm$1.0 cm. In Comparative Example 2, the amount of AE water-reducing agent added was changed so as to adjust to a slump of 10.0$\pm$1.0 cm.

The concrete composition was prepared on a 60-L forced two-impeller mixer (WHQ-60A, Kitagawa Corp.). First, powder materials were admitted. That is, cement, fine aggregate, coarse aggregate, and thickener (thickener No. 9, comparative thickener Nos. 1 to 3) in Example 9 and Comparative Examples 1 to 3 as powder materials were admitted, followed by dry mixing for 10 seconds. In the case of separate addition in Example 14, the materials excluding PEG-10 stearate were separately admitted, followed by dry mixing for 10 seconds. Thereafter, liquid materials were admitted. That is, there were added as the liquid materials, water, AE water-reducing agent, superplasticizer (high-performance AE water-reducing agent), AE agent, optionally defoamer II, and in Examples 1 to 8 and 10 to 13, the thickener-containing additive prepared in I) above, or in the case of separate addition in Example 14, a 100-fold dilution of PEG-10 stearate. Subsequent mixing for 90 seconds yielded a concrete composition. The amount per batch of the concrete composition being mixed was 50 liters. The amount of water added at this stage was the necessary weight of water (175,000 g/$m^3$) in the concrete formulation in Table 4 minus the total weight of the liquid materials (the thickener-containing additive (additive Nos. 1 to 8, 10 to 13), 100-fold dilution of PEG-10 stearate in Example 14 (separate addition), AE water-reducing agent, superplasticizer, and defoamer II).

Table 3A

| | | Thickener-containing additive No. | Thickener No. | Thickener-containing additive | | | | | | | | | Total |
|---|---|---|---|---|---|---|---|---|---|---|---|---|---|
| | | | | Thickener (separately added components) | | | | | | | | | |
| | | | | (A) Hydroxyalkyl alkyl cellulose | | (B) PEG derivative | | (A):(B) | (C) Water | Water repellent | | Defoamer I | |
| | | | | designation | wt% | designation | wt% | | wt% | type | wt% | wt% | wt% |
| Example | 1 | 1 | - | HPMC-1 | 0.79 | PEG-10 stearate | 0.21 | 79:21 | 99.00 | - | - | - | 100.0 |
| | 2 | 2 | - | HPMC-1 | 0.88 | PEG-10 stearate | 0.12 | 88:12 | 99.00 | - | - | - | 100.0 |
| | 3 | 3 | - | HPMC-1 | 0.71 | PEG-10 stearate | 0.29 | 71:29 | 99.00 | - | - | - | 100.0 |
| | 4 | 4 | - | HPMC-2 | 0.49 | PEG-10 stearate | 0.51 | 49:51 | 99.00 | - | - | - | 100.0 |
| | 5 | 5 | - | HPMC-3 | 0.54 | PEG-10 stearate | 0.46 | 54:46 | 99.00 | - | - | - | 100.0 |
| | 6 | 6 | - | HPMC-4 | 0.73 | PEG-10 stearate | 0.27 | 73:27 | 99.00 | - | - | - | 100.0 |
| | 7 | 7 | - | HEMC | 0.63 | PEG-10 stearate | 0.37 | 63:37 | 99.00 | - | - | - | 100.0 |
| | 8 | 8 | - | HPMC-1 | 0.79 | PEG-6 isostearate | 0.21 | 79:21 | 99.00 | - | - | - | 100.0 |
| | 9 | - | 9 | HPMC-1 | 79.0 | PEG-20 stearate | 21.0 | 79:21 | - | - | - | - | 100.0 |
| | 10 | 10 | - | HPMC-1 | 0.79 | PEG-10BG isostearate | 0.21 | 79:21 | 99.00 | - | - | - | 100.0 |
| | 11 | 11 | - | HPMC-1 | 0.71 | PEG-10 stearate | 0.19 | 79:21 | 99.00 | StCa | 0.10 | - | 100.0 |
| | 12 | 12 | - | HPMC-1 | 0.77 | PEG-10 stearate | 0.20 | 79:21 | 99.00 | - | - | 0.03 | 100.0 |
| | 13 | 13 | - | HPMC-1 | 0.77 | PEG-6 isostearate | 0.20 | 79:21 | 99.00 | - | - | 0.03 | 100.0 |
| | 14 | separately added | | HPMC-1 | 3.61 | PEG-10 stearate | 0.96 | 79:21 | 95.43 | - | - | - | 100.0 |
| Comparative Example | 1 | - | Comp. 1 | HPMC-1 | 100.00 | - | - | - | - | - | - | - | 100.0 |
| | 2 | - | Comp. 2 | HPMC-1 | 100.00 | - | - | - | - | - | - | - | 100.0 |
| | 3 | - | Comp. 3 | HPMC-1 | 96.40 | - | - | - | - | - | - | 3.60 | 100.0 |

Table 3B

| | | Thickener-containing additive No. | Thickener No. | Formulation to concrete (components added) | | | | | | | | |
|---|---|---|---|---|---|---|---|---|---|---|---|---|
| | | | | Thickener-containing additive/ Thickener/Separate addition | | | | | Other admixtures | | | |
| | | | | Component (A) | Component (B) | Component (C) | Water repellent | Defoamer I | AE water-reducing agent | Super-plasticizer | AE agent | Defoamer II |
| | | | | Addition amount (g/m$^3$) | | | | | (C×%) | | (A) | (T) |
| Example | 1 | 1 | - | 300.0 | 79.7 | 37,595 | - | - | 0.25 | - | 1.0 | - |
| | 2 | 2 | - | 300.0 | 40.9 | 33,750 | - | - | 0.25 | - | 1.0 | - |
| | 3 | 3 | - | 300.0 | 122.5 | 41,831 | - | - | 0.25 | - | 1.0 | - |
| | 4 | 4 | - | 76.0 | 79.1 | 15,355 | - | - | 0.25 | - | 0.8 | - |
| | 5 | 5 | - | 95.0 | 80.9 | 17,417 | - | - | 0.25 | - | 1.0 | - |
| | 6 | 6 | - | 213.0 | 78.8 | 28,886 | - | - | 0.25 | - | 0.5 | - |
| | 7 | 7 | - | 134.0 | 78.7 | 21,057 | - | - | 0.25 | - | 1.8 | - |
| | 8 | 8 | - | 300.0 | 79.7 | 37,595 | - | - | 0.25 | - | 2.0 | - |
| | 9 | - | 9 | 300.0 | 79.7 | - | - | - | 0.40 | - | 2.5 | - |
| | 10 | 10 | - | 300.0 | 79.7 | 37,595 | - | - | 0.40 | 0.85 | 0.5 | - |
| | 11 | 11 | - | 300.0 | 80.3 | 41,831 | 42.3 | - | 0.25 | - | 1.0 | - |
| | 12 | 12 | - | 300.0 | 77.9 | 38,571 | - | 11.7 | 0.25 | - | 3.0 | - |
| | 13 | 13 | - | 300.0 | 77.9 | 38,571 | - | 11.7 | 0.25 | - | 5.0 | - |
| | 14 | separately added | | 300.0 | 79.8 | 7,930 | - | - | 0.25 | - | 1.0 | - |
| Comparative Example | 1 | - | Comp. 1 | 300.0 | - | - | - | - | 0.25 | - | 1.0 | 2.5 |
| | 2 | - | Comp. 2 | 300.0 | - | - | - | - | 0.30 | - | 1.0 | 2.5 |
| | 3 | - | Comp. 3 | 300.0 | - | - | - | 11.2 | 0.25 | - | 7.0 | - |

Table 4

| Formulation No. | Concrete formulation | | | | | |
|---|---|---|---|---|---|---|
| | water/cement ratio (W/C), wt% | fine aggregate proportion* (s/a), vol% | unit amount ($kg/m^3$) | | | |
| | | | water (W) | cement (C) | fine aggregate (S) | coarse aggregate (G) |
| 1 | 55.0 | 529 | 175 | 318 | 931 | 861 |
| *fine aggregate proportion (vol%) = (volume of fine aggregate)/[(volume of fine aggregate)+(volume of coarse aggregate)] × 100 | | | | | | |

The resulting concrete compositions were tested under the following conditions.

<Fresh physical properties>

(Concrete temperature)

The temperatures of ingredients were adjusted such that the concrete composition reached a temperature of 20 ±3°C at the end of mixing.

The temperature of the concrete composition was measured by inserting the sensor of a digital thermometer (model SN3200II by Netsuken Co., Ltd.) into the concrete composition. All the concrete compositions showed a temperature within the range of 20±3°C.

(Slump)

Tested according to JIS A 1101.

(Air content test)

The concrete composition immediately after preparation (just as mixed) was measured for air content (vol%) according to JIS A 1128.

(Bleeding percentage)

The concrete composition immediately after preparation (just as mixed) was measured for bleeding percentage according to JIS A 1123.

(Air void analyzer (AVA) test or air void spacing factor)

Using an air void analyzer (AVA® by Germann Instruments), an air void spacing factor was measured as an index of frost damage resistance. A solution for the AVA test was prepared by previously mixing glycerin (FUJIFILM Wako Pure Chemical Corp.) and water in a weight ratio (glycerin/water) of 83/17.

The concrete composition as mixed was passed through a screen with an opening of 5 mm to collect a mortar composition for air void spacing factor evaluation. A 20-ml sample was taken into a special syringe, about 2,000 ml of water was injected into a measuring column, bubbles attached to the column wall were removed with a brush, and 250 ml of the AVA measuring solution was injected into the column at its bottom through a special tool. After injection, a bubble collecting petri dish was placed near the water surface of the column and secured to a measurement site. The 20-ml sample of mortar composition in the syringe was injected to the column bottom, after which the mortar composition was agitated for 30 seconds, allowing the air entrained in the mortar composition to fully release into the liquid. The amount of released air bubbles was measured with the lapse of time, from which an air void spacing factor was determined.

In calculating an air void spacing factor, the total volume of the mortar composition minus the volume of aggregates with a size of 5 mm or larger (i.e., volume percentage of mortar) and the paste volume (i.e., volume percentage of paste) were necessary as well as the air content of the fresh concrete. The volume percentages of mortar and paste were computed from the following equations (I) and (II).

$$\text{Volume percentage of mortar (\%)} = (V_B+V_W+V_S)/1000] \times 100 \qquad (I)$$

$$\text{Volume percentage of paste (\%)} = [(V_B+V_W)/1000] \times 100 \qquad \text{(II)}$$

$V_B$: Volume of cement (= unit weight (kg) of cement/specific gravity of cement)
Vw: Volume of liquid additives including water, AE agent and water-reducing agent, which is equal to the unit content of water
Vs: Volume of aggregates with a size of 5 mm or smaller (= unit content of fine aggregate/specific gravity of fine aggregate)

(Bubble proportion of each bubble size section)

When the air void analyzer is turned on according to the above procedure, automatic measurement starts. Coarse large bubbles rise more quickly in the column and are collected below the petri dish whereas fine small bubbles rise more slowly in the column. As the weight of the petri dish is measured with the lapse of time, the proportion of bubbles for each bubble size section is automatically computed.

(Air content (vol%))

The total of bubble proportions of bubble size sections is the air content (vol%).

<Cured physical properties>

(Compressive strength)

A compressive strength test was carried out on a 28-day aged concrete according to JIS A 1108. A specimen was sized 10 cm (diameter) by 20 cm. The average value of three specimens was evaluated as the compressive strength for each level.

(Freezing and thawing test)

The freezing and thawing test was carried out according to Method A of JIS A 1148-2010. A relative dynamic modulus of elasticity was measured until 300 cycles at the maximum. A specimen was sized 100 mm × 100 mm × 400 mm long. The average value of three specimens was evaluated as the relative dynamic modulus of elasticity for each level. When the relative dynamic modulus of elasticity decreased below 60% before reaching 300 cycles, the test was ended at that cycle.
Using the relative dynamic modulus of elasticity, an index of durability was computed according to the formula below, and rounded to an integer. A sample was judged to have frost damage resistance when the index of durability was 60 or higher.

$$\text{Index of durability} = P \times N/M$$

P: relative dynamic modulus of elasticity (%) at N cycles
N: smaller one of the number of cycles reaching a relative dynamic modulus of elasticity of 60% and 300 cycles
M: 300 cycles

The results of the above tests are shown in Tables 5A and 5B.

Table 5A

| | | Thickener-containing additive No. | Thickener No. | Fresh physical properties | | | | | Cured physical properties | |
|---|---|---|---|---|---|---|---|---|---|---|
| | | | | Concrete temp., (°C) | Slump, (cm) | Air meter: Air content (%) Immediately after preparation | Bleeding percentage (%) | AVA | Compressive strength age 28 days cure in water at 20°C | Freezing and thawing test Index of durability |
| Example | 1 | 1 | - | 20.0 | 10.0 | 4.7 | 1.40 | See Table 5B | 35.5 | 90 |
| Example | 2 | 2 | - | 19.5 | 9.0 | 4.5 | 1.45 | | 36.5 | 85 |
| Example | 3 | 3 | - | 19.8 | 11.0 | 4.6 | 1.34 | | 35.0 | 92 |
| Example | 4 | 4 | - | 20.2 | 9.0 | 4.7 | 1.30 | | 36.5 | 89 |
| Example | 5 | 5 | - | 20.2 | 9.5 | 4.5 | 1.35 | | 35.3 | 86 |
| Example | 6 | 6 | - | 19.5 | 11.0 | 4.6 | 1.30 | | 36.5 | 85 |
| Example | 7 | 7 | - | 19.8 | 9.5 | 4.7 | 1.45 | | 35.8 | 83 |
| Example | 8 | 8 | - | 20.2 | 10.0 | 4.6 | 1.41 | | 36.2 | 88 |
| Example | 9 | - | 9 | 20.1 | 13.0 | 4.7 | 1.41 | | 34.8 | 88 |
| Example | 10 | 10 | - | 19.4 | 19.0 | 4.5 | 1.45 | | 35.8 | 81 |
| Example | 11 | 11 | - | 19.8 | 9.5 | 4.6 | 1.35 | | 35.9 | 97 |
| Example | 12 | 12 | - | 20.8 | 12.5 | 4.5 | 1.25 | | 35.9 | 83 |
| Example | 13 | 13 | - | 20.3 | 12.0 | 4.5 | 1.26 | | 36.2 | 79 |
| Example | 14 | separately added | | 19.3 | 10.0 | 4.7 | 1.39 | | 37.0 | 86 |
| Comparative Example | 1 | - | Comp. 1 | 18.7 | 7.5 | 4.5 | 1.94 | | 36.0 | 12 |
| Comparative Example | 2 | - | Comp. 2 | 19.2 | 9.5 | 4.5 | 2.02 | | 35.2 | 12 |
| Comparative Example | 3 | - | Comp. 3 | 19.1 | 9.0 | 4.6 | 1.80 | | 35.1 | 6 |

Table 5B

| | | Thickener-containing additive No. | Thickener No. | Fresh physical properties | | | | | | | | | |
|---|---|---|---|---|---|---|---|---|---|---|---|---|---|
| | | | | AVA | | | | | | | | | |
| | | | | void spacing factor (µm) | Air content (%) | Bubble proportion of each bubble size section (%) | | | | | | | |
| | | | | | | 75-100 (µm) | 100-125 (µm) | 125-150 (µm) | 150-200 (µm) | 200-300 (µm) | 300-500 (µm) | 500-1000 (µm) | 1000-2000 (µm) |
| Example | 1 | 1 | - | 160 | 12.9 | 1.2 | 1.3 | 2.6 | 3.2 | 2.4 | 1.8 | 0.1 | 0.3 |
| | 2 | 2 | - | 173 | 13.2 | 1.1 | 1.0 | 2.5 | 3.3 | 2.5 | 1.9 | 0.3 | 0.6 |
| | 3 | 3 | - | 155 | 12.8 | 1.3 | 1.3 | 2.6 | 3.2 | 2.4 | 1.8 | 0.1 | 0.1 |
| | 4 | 4 | - | 164 | 13.4 | 1.5 | 1.0 | 2.6 | 3.6 | 2.3 | 1.7 | 0.2 | 0.5 |
| | 5 | 5 | - | 168 | 13.3 | 1.4 | 1.1 | 2.5 | 3.5 | 2.2 | 1.8 | 0.3 | 0.5 |
| | 6 | 6 | - | 175 | 13.2 | 1.0 | 1.1 | 2.5 | 3.3 | 2.5 | 1.9 | 0.3 | 0.6 |
| | 7 | 7 | - | 178 | 13.0 | 0.9 | 1.0 | 2.5 | 3.2 | 2.5 | 2.0 | 0.4 | 0.5 |
| | 8 | 8 | - | 170 | 13.3 | 1.1 | 1.2 | 2.5 | 3.3 | 2.4 | 1.8 | 0.3 | 0.7 |
| | 9 | - | 9 | 166 | 12.6 | 1.1 | 1.3 | 2.4 | 2.9 | 2.6 | 1.8 | 0.2 | 0.3 |
| | 10 | 10 | - | 185 | 12.2 | 0.9 | 1.0 | 2.5 | 2.9 | 2.3 | 1.8 | 0.4 | 0.4 |
| | 11 | 11 | - | 165 | 12.9 | 1.1 | 1.3 | 2.6 | 3.2 | 2.4 | 1.9 | 0.2 | 0.2 |
| | 12 | 12 | - | 180 | 12.6 | 1.0 | 1.1 | 2.5 | 3.0 | 2.5 | 1.9 | 0.2 | 0.4 |
| | 13 | 13 | - | 191 | 12.4 | 0.8 | 0.9 | 2.5 | 2.9 | 2.1 | 1.9 | 0.6 | 0.7 |
| | 14 | separately added | | 168 | 13.4 | 1.2 | 1.1 | 2.6 | 3.4 | 2.5 | 1.9 | 0.2 | 0.5 |
| Comparative Example | 1 | - | Comp. 1 | 265 | 14.6 | 0.0 | 0.7 | 0.6 | 2.3 | 3.1 | 4.4 | 3.0 | 0.5 |
| | 2 | - | Comp. 2 | 268 | 14.6 | 0.0 | 0.6 | 0.7 | 2.3 | 3.0 | 4.3 | 3.1 | 0.6 |
| | 3 | - | Comp. 3 | 412 | 11.2 | 0.0 | 0.3 | 0.4 | 0.6 | 0.5 | 2.4 | 5.4 | 1.6 |

The following is concluded from the above results. Examples 1 to 7 demonstrate that even when the hydroxyalkyl

alkyl cellulose as component (A) changes its viscosity, DS, and/or chemical structure, a hydraulic composition is advantageously improved in the three factors: fluidity, bleeding and frost damage resistance by adding the PEG derivative as component (B).

Examples 8 to 13 demonstrate that when the PEG derivative as component (B) changes its structure or the defoamer is added, a hydraulic composition is advantageously improved in the three factors: fluidity, bleeding and frost damage resistance.

Example 11 demonstrates that when calcium stearate is added, a hydraulic composition (concrete composition) is further improved in frost damage resistance while maintaining fluidity and bleeding.

Example 14 demonstrates that when components are separately added, a hydraulic composition is advantageously improved in the three factors: fluidity, bleeding and frost damage resistance.

It is noted that the invention is not limited to the aforementioned embodiments. While the embodiments are merely exemplary, any embodiments having substantially the same construction as the technical concept set forth in the following claims and exerting equivalent functions and results are believed to be within the spirit and scope of the invention.

## Claims

**1.** A thickener for hydraulic compositions comprising

(A) a hydroxyalkyl alkyl cellulose and
(B) a polyethylene glycol derivative having an IOB value in the organic conception diagram of 0.3 to 1.8 and a weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group.

**2.** The thickener of claim 1 wherein component (B) is at least one of polyethylene glycol derivatives having the general formulae (B1) and (B2):

$$RCOO\text{-}(C_2H_4O)_n\text{-}H \qquad (B1)$$

$$(RCOO\text{-}(C_2H_4O)_{n1})_tR^1((OC_2H_4)_{n2}\text{-}OH)_u \qquad (B2)$$

wherein Rand n are as defined above, $R^1$ is a residue obtained from a polyhydric alcohol having 2 to 5 hydroxy groups by eliminating the hydroxy groups, the residue being a di- to penta-valent $C_2$-$C_5$ straight or branched hydrocarbon group, t and u each are an integer of 1 to 4, the sum of t and u is an integer of 2 to 5, n1 and n2 each are an integer of at least 0, and $n1\times t+n2\times u$ is an integer of 3 to 30.

**3.** The thickener of claim 1 or 2 wherein the hydroxyalkyl alkyl cellulose as component (A) is hydroxypropyl methyl cellulose or hydroxyethyl methyl cellulose.

**4.** The thickener of any one of claims 1 to 3 wherein the hydroxyalkyl alkyl cellulose as component (A) has a 2 wt% aqueous solution viscosity of 15 to 450,000 mPa·s at 20°C.

**5.** The thickener of any one of claims 1 to 4, further comprising a water repellent.

**6.** A thicker-containing additive for hydraulic compositions, comprising the thickener of any one of claims 1 to 4 and (C) water and/or a liquid water-reducing agent.

**7.** A hydraulic composition comprising the thicker-containing additive of claim 6, a hydraulic substance, and water.

**8.** A hydraulic composition comprising the thickener of any one of claims 1 to 4, a hydraulic substance, and water and/or a liquid water-reducing agent.

**9.** A hydraulic composition comprising

(A) a hydroxyalkyl alkyl cellulose,
(B) a polyethylene glycol derivative having an IOB value in the organic conception diagram of 0.3 to 1.8 and a

weight average molecular weight Mw of 300 to 2,500 as measured by gel permeation chromatography versus polystyrene standards, and containing at least one $RCOO(C_2H_4O)_n$- wherein R is a $C_{10}$-$C_{24}$ straight or branched monovalent hydrocarbon group and n is an integer of 3 to 40 in the molecule and a polyethylene glycol end OH or -OH group as a functional group,
a hydraulic substance, and
water and/or a liquid water-reducing agent.

**10.** The hydraulic composition of any one of claims 7 to 9, further comprising a water repellent.

**11.** The hydraulic composition of any one of claims 7 to 10, which is a concrete composition further comprising a fine aggregate, a coarse aggregate, and a water-reducing agent,
the concrete composition having a slump of 8 to 21 cm as measured by the method of JIS A 1101 and a compressive strength of 18 to 45 $N/mm^2$ as measured by the method of JIS A 1108 at an age of 28 days.

Europäisches Patentamt
European Patent Office
Office européen des brevets

# EUROPEAN SEARCH REPORT

Application Number
EP 24 17 8903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 232250 B2 (PIAS ARISE KK) 15 November 2017 (2017-11-15) * paragraphs [0044], [0054] - [0094] * | 1-4 | INV. C04B28/04 C04B40/00 |
| X | WO 03/024884 A1 (NMB LTD [JP]; OKAZAWA SATOSHI [JP] ET AL.) 27 March 2003 (2003-03-27) * the whole document * | 1-11 | ADD. C04B103/44 |
| A | EP 2 966 049 B1 (SHINETSU CHEMICAL CO [JP]) 26 January 2022 (2022-01-26) * the whole document * | 1-11 | |

TECHNICAL FIELDS SEARCHED (IPC)

C04B

The present search report has been drawn up for all claims

| Place of search | Date of completion of the search | Examiner |
|---|---|---|
| Munich | 13 November 2024 | Gattinger, Irene |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 8903

This annex lists the patent family members relating to the patent documents cited in the above-mentioned European search report. The members are as contained in the European Patent Office EDP file on
The European Patent Office is in no way liable for these particulars which are merely given for the purpose of information.

13-11-2024

| Patent document cited in search report | Publication date | Patent family member(s) | Publication date |
|---|---|---|---|
| JP 6232250 B2 | 15-11-2017 | JP 6232250 B2 | 15-11-2017 |
| | | JP 2015078167 A | 23-04-2015 |
| WO 03024884 A1 | 27-03-2003 | CA 2460517 A1 | 27-03-2003 |
| | | EP 1426349 A1 | 09-06-2004 |
| | | JP 4096192 B2 | 04-06-2008 |
| | | JP 2008137889 A | 19-06-2008 |
| | | JP WO2003024884 A1 | 24-12-2004 |
| | | US 2004259983 A1 | 23-12-2004 |
| | | US 2006032409 A1 | 16-02-2006 |
| | | US 2006124034 A1 | 15-06-2006 |
| | | WO 03024884 A1 | 27-03-2003 |
| EP 2966049 B1 | 26-01-2022 | CN 105314921 A | 10-02-2016 |
| | | EP 2966049 A1 | 13-01-2016 |
| | | JP 6428500 B2 | 28-11-2018 |
| | | JP 2016056081 A | 21-04-2016 |
| | | KR 20160007383 A | 20-01-2016 |
| | | TW 201619268 A | 01-06-2016 |
| | | US 2016009599 A1 | 14-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05085791 A


### Non-patent literature cited in the description


- Approach to emulsion formulation design. What is an emulsion formulation design with organic conception diagram?. Nihon Emulsion Co., Ltd., 10 January 2023, 2-9
- Japanese Pharmacopoeia
- Approach to emulsion formulation design. What is an emulsion formulation design with organic conception diagram?. Nihon Emulsion Co., Ltd., 2-9
- Approach to emulsion formulation design. What is an emulsion formulation design with organic conception diagram. Nihon Emulsion Co., Ltd., 2-9